# EUROPÄISCHE PATENTSCHRIFT

(11) **EP 0 933 258 B1**
(45) Veröffentlichungstag und Bekanntmachung des Hinweises auf die Patenterteilung: **19.03.2003**
(21) Anmeldenummer: 98124263.9
(22) Anmeldetag: 18.12.1998
(51) Int. Cl.: B60R 9/04, B60R 9/045

(54) **Dachgepäckträger für Personenwagen**
Vehicle roof rack
Porte-bagages de toit pour véhicule

(30) Priorität: 03.02.1998 DE 19804158
(43) Veröffentlichungstag der Anmeldung: 04.08.1999
(73) Patentinhaber: Dr.Ing. h.c.F. Porsche Aktiengesellschaft, 70435 Stuttgart (DE)
(72) Erfinder: Heiler, Roland, 85114 Buxheim (DE)

(56) Entgegenhaltungen:
- EP-A- 0 411 988
- DE-A- 3 719 974
- DE-A- 3 826 662
- DE-A- 4 018 009
- FR-A- 2 733 951
- FR-A- 2 746 735
- US-A- 5 253 792
- PATENT ABSTRACTS OF JAPAN vol. 1996, no. 02, 29. Februar 1996 (1996-02-29) & JP 07 257285 A (ARACO CORP), 9. Oktober 1995 (1995-10-09)

## Beschreibung

Die Erfindung betrifft einen Dachgepäckträger für Personenwagen nach dem Oberbegriff des Patentanspruchs 1.

Bei einem gattungsgemässen Dachgepäckträger US-PS 5 253 792 besteht die Möglichkeit, Längs- und Querträger des Dachgepäckträgers aus einer Absenkstellung in eine Gebrauchsstellung und vice versa zu bewegen. Dieser Ausführung haftet jedoch der Nachteil an, daß auch in der Absenkstellung Bauteile des Dachgepäckträgers über die Dachoberfläche hinausragen, was zum einen solche Luftströmungen erzeugt, die den Luftwiderstandsbeiwert des Personenwagens beeinträchtigen und zum anderen störende Fahrgeräusche verursachen.

Aufgabe der Erfindung ist es daher, den Dachgepäckträger und das angrenzende Dach so zu gestalten, daß im Fahrbetrieb zumindest in seiner Absenkstellung günstige aerodynamische Verhältnisse erzielt und störende Anströmgeräusche vermieden werden. Dabei sollte aber auch sichergestellt sein, daß die Handhabung des Dachgepäckträgers einfach ist und die konstruktiven Vorkehrungen sowie die erforderlichen Bauteile leicht zu verwirklichen sind.

Erfindungsgemäß wird diese Aufgabe durch die Merkmale des Patentanspruchs 1 gelöst. Weitere, die Erfindung ausgestaltende Merkmale, sind in den Unteransprüchen enthalten.

Die mit der Erfindung hauptsächlich erzielten Vorteile sind darin zu sehen, daß die seitlichen Längsträger des Dachgepäckträgers in der Absenkstellung in Aufnahmen des Daches integriert und versenkt sind, was nicht nur den Fahrwiderstandsbeiwert verbessert und Strömungsgeräusche reduziert, sondern auch noch einen besonderen ästhetischen Effekt bewirkt. Hinzu kommt, daß der Umbau des Dachgepäckträgers von der Absenkstellung in die Gebrauchsstellung und umgekehrt sich aufwandsarm bewerkstelligen läßt. In der Gebrauchtsstellung sind zumindest die Endbereiche der Endstücke, ohne das Dach zu überragen, in die Ausnehmungen der Aufnahmen eingesetzt, wodurch ein organischer Verlauf zwischen den Endstücken und dem Dach entsteht. Schließlich können die die Aufnahmen des Daches bildenden Formabschnitte, die auf einer linsenartigen Ausprägung liegen, bei der Konzeption eines Aufbaues ohne weiteres berücksichtigt werden können.

In der Zeichnung ist ein Ausführungsbeispiel der Erfindung dargestellt, das nachstehend näher beschrieben ist.

Es zeigen:
- Fig. 1: Eine Schrägansicht von hinten auf einen Aufbau eines Personenwagens,
- Fig. 2: eine Teilansicht der Fig. 1 in größerem Maßstab,
- Fig. 3 bis 5: Ansichten entsprechend Fig. 2,
- Fig. 6: eine Ansicht in Pfeilrichtung A der Fig. 4,
- Fig. 7: einen Schnitt nach der Linie VII-VII der Fig. 6 in größerem Maßstab.

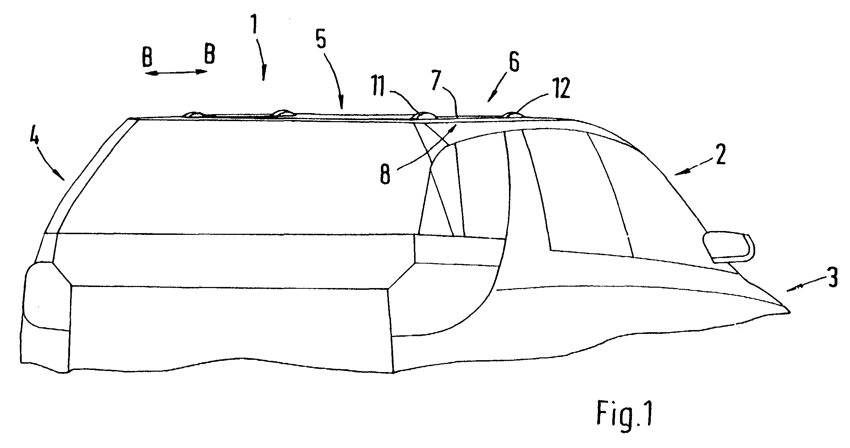

In Fig. 1 ist ein Personenwagen 1 dargestellt, der einen Aufbau 2 mit Stufenbug 3 und aufrechter Heckklappe 4 umfaßt. Ein Dach 5 des Aufbaues 2 ist mit einem Dackgepäckträger 6 versehen, der zwei Längsträger 7 aufweist, die jeweils benachbart von beiden Längsseiten 8 des Daches 5 verlaufen. Die Längsträger 7 sind mit Endstücken 9, 10 versehen, die - in Fahrzeuglängsrichtung B-B gesehen - in beabstandeten Aufnahmen 11, 12 gelagert sind.

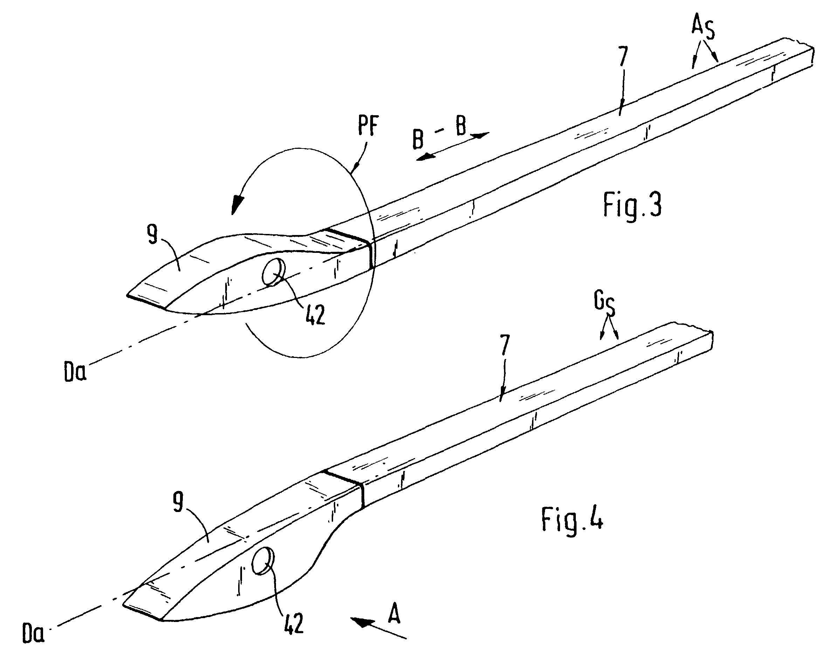

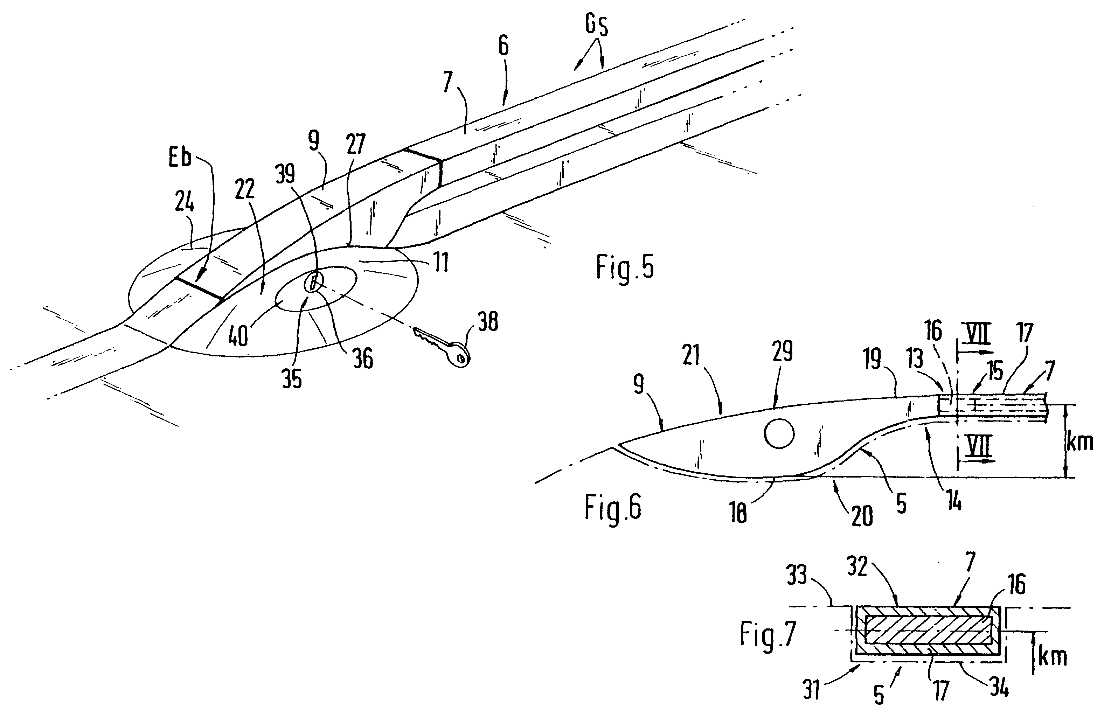

Der Dachgepäckträger 6 ist verstellbar, und zwar aus einer Absenkstellung As - Fig. 1, 2 und 3 - in eine Gebrauchsstellung Gs - Fig. 4 und 5 - und vice versa. Hierzu werden die Endstücke 9, 10 aus Aufnahmen 11, 12 und von den Längsträgern 7 gelöst, um eine in Fahrzeuglängsrichtung B-B - Fig. 3 und 4 - ausgerichtete Drehachse Da um 180 ° gedreht - Pfeilrichtung PF - Fig. 3 - und danach wieder mit den Längsträgern 7 verbunden und in den Aufnahmen 11, 12 festgesetzt.

Aus den Fig. 6 und 7 geht hervor, daß jeder Längsträger 7 mit den Endstücken über eine leicht lösbare Steckverbindung 13 zusammenwirkt. Die Steckverbindung 13 weist Verbindungsteile 14, 15 auf, die, weil viereckigen Querschnitts Formschluß bewirkend, durch einen Zapfen 16 und eine Hülse 17 gebildet werden. Im Ausführungsbeispiel ist der Zapfen 16 Teil des Endstückes 9; die Hülse 17 Teil des Längsträgers 7.

Das Endstück 9 weist einen ersten Basisbereich 18 und einen zweiten Basisbereich 19 auf - Fig. 6 -, die gegenüberliegende Seiten 20, 21 des Endstückes 9 begrenzen. Dabei ist das Verbindungsteil 14 bzw. der Zapfen 16 gegenüber dem ersten Basisbereich 18 um ein Maß Km (Kropfmaß) abgekröpft.

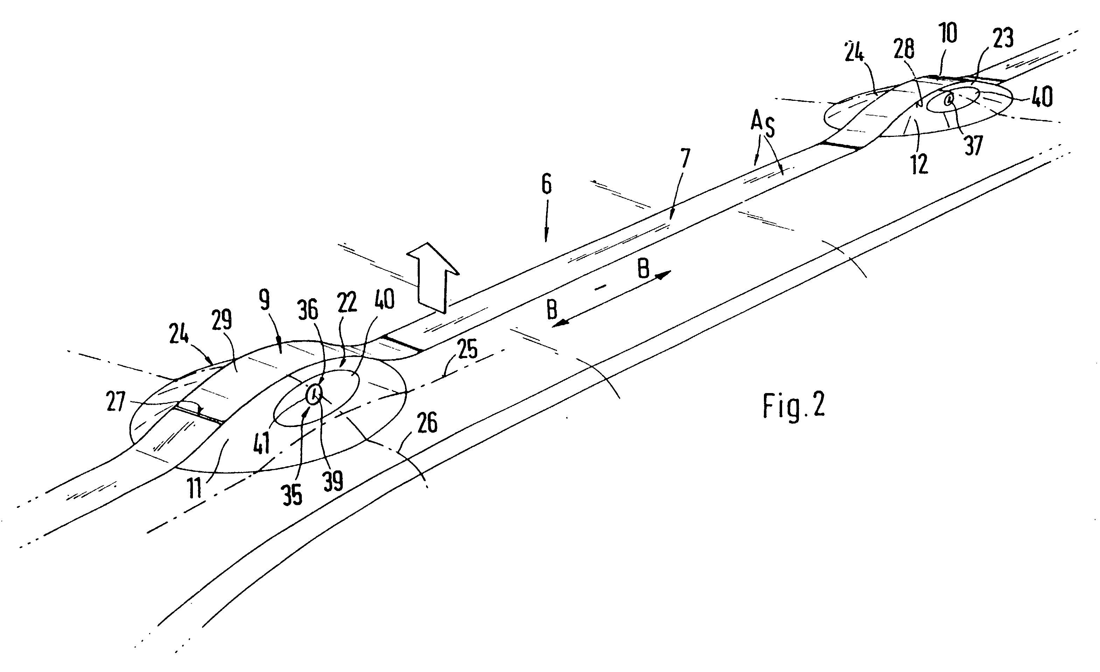

Die Aufnahme 11, 12 werden durch konvexe Formabschnitte 22, 23 des Daches 5 gebildet. Jeder Formabschnitt 22 liegt auf einer linsenartigen Ausprägung 24 des Daches 5, die durch Formlinien 25, 26 - Fig. 2 - definiert sind. Die Formlinie 25 erstreckt sich in Fahrzeuglängsrichtung B-B; die Formlinie 26 quer dazu.

In den Formabschnitten 22, 23 sind Ausnehmungen 27, 28 - Fig. 2 und 5 - vorgesehen, in die Endstücke 9, 10 eingesetzt sind. In der Absenkstellung As sind die Endstücke 9, 10 voll versenkt in die Ausnehmungen 27, 28 eingelassen, wobei eine Außenseite 27 dieser Endstücke 9, 10 zu einer Außenform 30 der Formabschnitte 22, 23 oberflächenbündig verläuft. Außerdem sind in der Absenkstellung As auch die Längsträger 7 in vollem Umfang versenkt im Dach 5 angeordnet, wofür in das Dach 5 Rinnen 31 - Fig. 7 - eingeformt sind. Eine Außenfläche 32 der Längsträger 7 verläuft oberflächenbündig mit der Dachaußenseite 33. Zwischen Längsträger 7 und Boden 34 der Rinne 31 kann eine Auflage, z.B. aus elastischem Material, vorgesehen sein.

In der Gebrauchsstellung Gs - Fig. 4 und 5 - ruhen die Endstücke 9, 10 auf den dem Längsträger 7 abgekehrten Endbereichen Eb ebenfalls versenkt in den Ausnehmungen 27, 28, d.h. die Endbereiche Eb verlaufen oberflächenbündig zu der Außenform der Formabschnitte 22, 23.

Zur Sicherung des Dachgepäckträgers 6 am Dach 5 dient eine Schloßeinrichtung 35, die mehrere Schlösser 36, 37 umfaßt, will heißen, pro Aufnahme, z.B. 11, jeweils ein Schloß. Das Schloß 36 wirkt zwischen Aufnahme 11 und Endstück 9 und ist mittels eines Schlüssels 38, der in einen Schließzylinder 39 einführbar ist. Schließlich sind in den Formabschnitten 22, 23 im Bereich des Schließzylinders 39 Einformungen 40 vorgesehen, und der Schließzylinder 39 durchdringt Öffnungen in den Formabschnitten 22, 23 und den Endstücken 9, 10.

## Patentansprüche

1. Dachgepäckträger (6) für Personenwagen (1) mit zumindest zwei benachbart von Längsseiten eines Daches eines Aufbaues verlaufenden Längsträgers (7), die mit Endstücken (9, 10) in beabstandeten Aufnahmen (11, 12) gelagert sind, dergestalt, daß die Längsträger aus einer Absenkstellung (As) in eine Gebrauchsstellung (Gs) und vice versa bewegbar sind, **dadurch gekennzeichnet, daß** die Längsträger (7) mit den Endstücken (9, 10) lösbar verbunden sind, welche Endstücke (9, 10) zur Einstellung der Gebrauchsstellung (Gs) oder Absenkstellung (As) oberhalb des Daches (5) durch eine Drehbewegung außerhalb der Aufnahmen (11, 12) des Daches (5) um eine in Fahrzeuglängsrichtung (B-B) ausgerichtete Drehachse (Da) verstellt und dann in die Aufnahmen (11, 12) eingesetzt werden können.

2. Dachgepäckträger nach Anspruch 1, **dadurch gekennzeichnet, daß** der Längsträger (7) mit den Endstücken (9, 10) über Steckverbindungen (13) zusammenwirkt.

3. Dachgepäckträger nach Anspruch 2, **dadurch gekennzeichnet, daß** die Steckverbindungen (13) formschlussbewirkende Verbindungsteile (14, 15) z.B. mit viereckigem Querschnitt an dem Längsträger (7) und den Endstücken (9, 10) umfassen, welche Verbindungsteile (14, 15) durch Zapfen (16) und Hülsen (17) gebildet werden.

4. Dachgepäckträger nach Anspruch 1, **dadurch gekennzeichnet, daß** die Endstücke (9, 10) zur Einstellung der Gebrauchsstellung (Gs) oder der Absenkstellung (As) um 180 ° gedreht werden.

5. Dachgepäckträger nach einem oder mehreren der vorangehenden Ansprüche, **dadurch gekennzeichnet, daß** jedes Endstück (9) einen ersten Basisbereich (18) und einen zweiten Basisbereich (19) aufweist, die gegenüberliegende Seiten (20, 21) des Endstückes (9) begrenzen, wobei das Verbindungsteil (14) seitens des Endstückes (9) in bezug auf den ersten Basisbereich (19) um ein Maß (Mk) abgekröpft ist.

6. Dachgepäckträger nach Anspruch 1, **dadurch gekennzeichnet, daß** die Aufnahmen (11, 12) durch konvexe Formabschnitte (22, 23) des Daches (5) gebildet werden.

7. Dachgepäckträger nach Anspruch 7, **dadurch gekennzeichnet, daß** die Formabschnitte (22, 23) auf einer linsenartigen Ausprägung (24) des Daches (5) liegen.

8. Dachgepäckträger nach Anspruch 6, **dadurch gekennzeichnet, daß** die Formabschnitte (22, 23) Ausnehmungen (27, 28) aufweisen, in die die Endstücke (9, 10) versenkt eingesetzt sind.

9. Dachgepäckträger nach einem oder mehreren der vorangehenden Ansprüche, **dadurch gekennzeichnet, daß** die Endstücke (9, 10) zumindest in der Absenkstellung (As) in vollem Umfang versenkt in den Formabschnitten (22, 23) ruhen, wobei eine Außenseite (29) der Endstücke (9, 10) mit einer Außenform (30) der Formabschnitte (22, 23) bündig verlaufend ausgebildet sind.

10. Dackgepäckträger nach einem oder mehreren der vorangehenden Ansprüche, **dadurch gekennzeichnet, daß** die Längsträger (7) in der Absenkstellung (As) im wesentlichen voll versenkt in Rinnen (31) des Daches (5) angeordnet sind.

11. Dackgepäckträger nach einem oder mehreren der vorangehenden Ansprüche, **dadurch gekennzeichnet, daß** die Endstücke (9, 10) in der Gebrauchsstellung (Gs) mit auf den Längsträger (7) abgekehrten Endbereichen (Eb) in den Ausnehmungen (27, 28) ruhen und zu der Außenform (30) der Formabschnitte (22, 23) oberflächenbündig ausgerichtet sind.

12. Dackgepäckträger nach einem oder mehreren der vorangehenden Ansprüche, **dadurch gekennzeichnet, daß** die aus Endstücken (9, 10) und Längsträgern (7) bestehende Baueinheit mit einer Schloßeinrichtung (35) festlegbar ist.

13. Dachgepäckträger nach Anspruch 12, **dadurch gekennzeichnet, daß** die Schloßeinrichtung (35) je Längsträger (7) zumindest ein Schloß (36) aufweist, das zwischen Aufnahme (11) und Endstück (9) wirksam ist.

14. Dachgepäckträger nach Anspruch 13, **dadurch gekennzeichnet, daß** an jeder Aufnahme (11 und 19) ein Schloß (36) vorgesehen ist.

## Claims

1. A roof rack (6) for passenger cars (1) with at least two longitudinal members (7) which extend adjacent to longitudinal sides of a roof of a body and which are mounted with end pieces (9, 10) in spaced receiving means (11, 12), in such a way that the longitudinal members are movable from a lowered position (**As**) into a position of use (**Gs**) and *vice versa*, **characterized in that** the longitudinal members (7) are connected in a releasable manner to the end pieces (9, 10), which end pieces (9, 10) can be displaced above the roof (5) by a rotational movement external of the receiving means (11, 12) of the roof (5) about an axis of rotation (**Da**) orientated in the longitudinal direction (**B-B**) of the vehicle in order to set the position of use (**Gs**) or lowered position (**As**) and can then be inserted into the receiving means (11, 12).

2. A roof rack according to Claim 1, **characterized in that** the longitudinal member (7) co-operates with the end pieces (9, 10) by way of plug-and-socket connexions (13).

3. A roof rack according to Claim 2, **characterized in that** the plug-and-socket connexions (13) comprise connecting parts (14, 15) effecting positive locking, for example with a square cross-section, on the longitudinal member (7) and the end pieces (9, 10), which connecting parts (14, 15) are formed by pins (16) and sleeves (17).

4. A roof rack according to Claim 1, **characterized in that** the end pieces (9, 10) are rotated about 180° in order to set the position of use (**Gs**) or the lowered position (**As**).

5. A roof rack according to one or more of the preceding Claims, **characterized in that** each end piece (9) comprises a first base region (18) and a second base region (19), which bound opposite sides (20, 21) of the end piece (9), wherein the connecting part (14) is bent over by an amount (**Mk**) at the side of the end piece (9) with respect to the first base region (18).

6. A roof rack according to Claim 1, **characterized in that** the receiving means (11, 12) are formed by convex shaped portions (22, 23) of the roof (5).

7. A roof rack according to Claim 6, **characterized in that** the shaped portions (22, 23) are situated on a phacoid pressed portion (24) on the roof (5).

8. A roof rack according to Claim 6, **characterized in that** the shaped portions (22, 23) have recesses (27, 28) into which the end pieces (9, 10) are inserted in a recessed manner.

9. A roof rack according to one or more of the preceding Claims, **characterized in that** the end pieces (9, 10) rest in a recessed manner in the shaped portions (22, 23) in their entirety at least in the lowered position (**As**), wherein an outer side (29) of the end pieces (9, 10) is designed so as to extend in alignment with an outer shape (30) of the shaped portions (22, 23).

10. A roof rack according to one or more of the preceding Claims, **characterized in that** the longitudinal members (7) in the lowered position (**As**) are arranged substantially completely recessed in channels (31) of the roof (5).

11. A roof rack according to one or more of the preceding Claims, **characterized in that** the end pieces (9, 10) in the position of use (**Gs**) rest in the recesses (27, 28) with end regions (**Eb**) remote [from] the longitudinal member (7) and are orientated with respect to the outer shape (30) of the shaped portions (22, 23) so that their surfaces are in alignment.

12. A roof rack according to one or more of the preceding Claims, **characterized in that** the structural unit comprising the end pieces (9, 10) and the longitudinal members (7) can be fastened with a lock device (35).

13. A roof rack according to Claim 12, **characterized in that** the lock device (35) has, *per* longitudinal member (7), at least one lock (36) which is effective between the receiving means (11) and the end piece (9).

14. A roof rack according to Claim 13, **characterized in that** a lock (36) is provided on each receiving means (11 and 19 [*sic*]).

## Revendications

1. Porte-bagages de toit (6) pour voiture de tourisme (1) comportant au moins deux longerons (7) s'étendant à proximité des côtés longitudinaux d'un toit d'une carrosserie, et qui sont montés par des embouts (9, 10) dans des logements (11, 12) espacés, de manière que les longerons puissent être déplacés d'une position abaissée (As) dans une position d'utilisation (Gs) et inversement, **caractérisé en ce que** les longerons (7) sont reliés aux embouts (9, 10) de manière séparable, lesquels embouts (9, 10) peuvent être déplacés, pour le réglage de la position d'utilisation (Gs) ou de la position abaissée (As), au-dessus du toit (5), par un mouvement de rotation à l'extérieur des logements (11, 12) du toit (5), autour d'un axe de rotation (Da) orienté dans la direction longitudinale (B-B) du véhicule, puis insérés dans les logements (11, 12).

2. Porte-bagages de toit selon la revendication 1, **caractérisé en ce que** le longeron (7) coopère avec les embouts (9, 10) par des raccords à emboîtement (13).

3. Porte-bagages de toit selon la revendication 2, **caractérisé en ce que** les raccords à emboîtement (13) comprennent des éléments de liaison (14, 15) agissant par complémentarité de forme, par exemple de section quadrangulaire sur le longeron (7) et les embouts (9, 10), lesquels éléments de liaison (14, 15) sont formés par des goupilles (16) et des douilles (17).

4. Porte-bagages de toit selon la revendication 1, **caractérisé en ce que** les embouts (9, 10) sont tournés de 180° pour le réglage de la position d'utilisation (Gs) ou de la position abaissée (As).

5. Porte-bagages de toit selon une ou plusieurs des revendications précédentes, **caractérisé en ce que** chaque embout (9) comporte une première zone de base (18) et une deuxième zone de base (19) qui limitent des côtés (20, 21) opposés de l'embout (9), l'élément de liaison (14) étant coudé du côté de l'embout (9), d'une cote (Mk) par rapport à la première zone de base (19).

6. Porte-bagages de toit selon la revendication 1, **caractérisé en ce que** les logements (11, 12) sont formés par des parties façonnés (22, 23) convexes du toit (5).

7. Porte-bagages de toit selon la revendication 6, **caractérisé en ce que** les parties façonnées (22, 23) se situent sur un bossage (24) du toit (5) de type lentille.

8. Porte-bagages de toit selon la revendication 6, **caractérisé en ce que** les parties façonnées (22, 23) présentent des évidements (27, 28) dans lesquels sont encastrés les embouts (9, 10).

9. Porte-bagages de toit selon une ou plusieurs des revendications précédentes, **caractérisé en ce qu'**au moins dans la position abaissée (As), les embouts (9, 10) sont pleinement encastrés dans les parties façonnées (22, 23), et un côté extérieur (29) des embouts (9, 10) est réalisé de manière à s'étendre à fleur d'une forme extérieure (30) des parties façonnées (22, 23).

10. Porte-bagages de toit selon une ou plusieurs des revendications précédentes, **caractérisé en ce que** dans la position abaissée (As), les longerons (16) sont disposés sensiblement entièrement encastrés dans des rigoles (31) du toit (5).

11. Porte-bagages de toit selon une ou plusieurs des revendications précédentes, **caractérisé en ce qu'**en position d'utilisation (Gs), les embouts (9, 10) reposent par des zones terminales (Eb), tournées à l'opposé du longeron (7), dans les évidements (27, 28) et sont orientées à fleur de la surface de la forme extérieure (30) des parties façonnées (22, 23).

12. Porte-bagages de toit selon une ou plusieurs des revendications précédentes, **caractérisé en ce que** l'unité de construction constituée des embouts (9, 10) et des longerons (7) peut être fixée au moyen d'un dispositif à serrure (35).

13. Porte-bagages de toit selon la revendication 12, **caractérisé en ce que** le dispositif à serrure (35) comporte par longeron (7) au moins une serrure (36) qui opère entre le logement (11) et l'embout (9).

14. Porte-bagages de toit selon la revendication 13, **caractérisé en ce qu'**une serrure (36) est prévue sur chaque logement (11 et 19).
